# EUROPÄISCHE PATENTANMELDUNG

(11) **EP 1 422 406 A2**
(43) Veröffentlichungstag der Anmeldung: **26.05.2004**
(21) Anmeldenummer: 03019047.4
(22) Anmeldetag: 22.08.2003
(51) Int. Cl.: F02D 11/10

(54) **Stellantriebsvorrichtung**

(30) Priorität: 20.11.2002 DE 10254102
(71) Anmelder: Pierburg GmbH, 41460 Neuss (DE)
(72) Erfinder: Sovva, Elina, 47167 Duisburg (DE); Corbach, Peter, 44879 Bochum (DE); Hüsges, Hans-Jürgen, 47877 Willich (DE)
(74) Vertreter: Ter Smitten, Hans

(57) **Zusammenfassung**

In der Erfindung wird eine Stellantriebsvorrichtung beschrieben, bei der lediglich ein Antriebselement 5 gleichzeitig zwei Abtriebswellen 14, 16 antreibt, die über Zahnräder miteinander gekoppelt sind und sich so gegensinnig drehen. Durch ein entsprechendes Gestänge wird diese Drehung der Abtriebswellen 14, 16 auf zwei Klappenwellen 3 übertragen.

Es wird also möglich, auf einfache Art und Weise mit nur einem Antriebselement zwei Klappenwellen ohne zusätzliche Lagerstelle für ein Kopplungselement schalten zu können.

## Beschreibung

Die Erfindung betrifft eine Stellantriebsvorrichtung zur Verstellung von Schalt-, Regeloder Steuerklappen in Verbrennungskraftmaschinen der V-Bauart mit zwei Klappenwellen, die über ein Antriebselement mit einer Antriebswelle und eine Getriebeeinheit antreibbar sind, wobei die Drehung der Antriebswelle mit einem vorgegebenen Übersetzungsverhältnis über die Getriebeeinheit auf eine Abtriebswelle übertragbar ist.

Stellantriebsvorrichtungen, insbesondere zur Verstellung von Schalt-, Regel- und Steuerklappen sind allgemein bekannt und werden in verschiedenen Schriften beschrieben. Eine besondere Bedeutung kommt dabei den elektromotorisch angetriebenen Stellantriebsvorrichtungen zu. Eine solche wird beispielsweise in der Offenlegungsschrift DE 198 05 908 A1 beschrieben, bei der innerhalb eines Gehäuses ein Elektromotor und eine Getriebeeinheit angeordnet sind, welche über eine Antriebswelle und einem darauf angeordneten Ritzelrad angetrieben wird. Über die Getriebeeinheit wird eine aus dem Gehäuse reichende Abtriebswelle angetrieben, welche in Wirkverbindung mit einer Klappenwelle steht. Ist es nun erforderlich, mehrere Klappenwellen anzutreiben, so werden in der Regel mehrere Stellantriebsvorrichtungen verwendet. Müssen nun mehrere Klappenwellen in gleicher Weise angesteuert und gedreht werden, wie es beispielsweise bei Schaltklappen in Verbrennungsmotoren der V-Bauart der Fall ist, so kann auch nur eine Stellantriebsvorrichtung mit einer Abtriebswelle verwendet werden, wenn die Klappenwellen über ein entsprechendes Gestänge mit der Abtriebswelle verbunden werden. Da diese Verstellung der Klappen von der Drehrichtung her gegensinnig erfolgen muß, wird in der Praxis eine Ausführung verwendet, bei der die Abtriebswelle drehbar mit einem Umlenkhebel verbunden ist, der wiederum über ein Gestänge die Verbindung zu den beiden Schaltklappenwellen herstellt. Um eine solche Ausführung zu verwirklichen, ist es notwendig, den Umlenkhebel extern z.B. am Gehäuse eines Luftansaugkanalsystems zu lagern.

Nachteilig sowohl bei der Ausführungsform mit mehreren Stellantriebsvorrichtungen, als auch bei der Ausführungsform mit Umlenkgestängen sind der benötigte Platzbedarf und die entstehenden Bauteil- und Montagekosten, insbesondere bei der Ausführung mit mehreren Stellantriebsvorrichtungen. Des weiteren ist das zu verwendende Gestänge bei nur einer Stellantriebsvorrichtung in seinem Aufbau und seiner Fertigung kompliziert, da durch die externe Lagerung Toleranzprobleme auftreten.

Aufgabe der Erfindung ist es daher, eine Stellantriebsvorrichtung zu schaffen, durch die zwei gegensinnig zu verstellende Klappenwellen angetrieben werden können, ohne eine externe Lagerung oder mehrere Stellantriebsvorrichtungen verwenden zu müssen, um dadurch Bauteile und Kosten zu reduzieren und den Aufbau zu vereinfachen.

Diese Aufgabe wird dadurch gelöst, daß die Getriebeeinheit zwei Abtriebswellen aufweist, die jeweils mechanisch in Wirkverbindung mit der zugehörigen Klappenwelle stehen. Durch eine solche Ausführung entfällt die zusätzliche Lagerung und zwei Klappenwellen können mit nur einer Stellantriebsvorrichtung betätigt werden, wodurch Bauteilanzahl und Kosten sinken.

Das Antriebselement ist vorzugsweise ein Elektromotor, wodurch die Verstellung der Klappenwelle auf einfache Art und Weise über die Motorsteuerung gesteuert werden kann, wodurch eine fehlerfreie Funktionsweise sicher gestellt wird.

In einer bevorzugten Ausführungsform weist die Getriebeeinheit zwei Abtriebszahnräder auf, die drehfest mit je einer Abtriebswelle verbunden sind. Eine solche Anordnung ist im Aufbau einfach und durch die formschlüssige Kraftübertragung zuverlässig.

In einer weiterführenden Ausführungsform kämmt das erste Abtriebszahnrad mit dem zweiten Abtriebszahnrad, so daß die beiden Abtriebswellen in entgegengesetzter Richtung drehend antreibbar sind. Eine solche Koppelung beider Abtriebe sichert eine Drehung um einen gleichen Drehwinkel beider Abtriebswellen auf zuverlässige und einfache Art und Weise.

In einer vorteilhaften Ausgestaltung der Erfindung erfolgt die mechanische Wirkverbindung zwischen jeweils einer der Abtriebswellen und jeweils einer der Klappenwellen direkt über je ein Gestänge. Es wird somit eine formschlüssige Verbindung von der ersten Abtriebswelle zu einer ersten Klappenwelle und von der zweiten Abtriebswelle zu einer zweiten Klappenwelle hergestellt. Diese Art der Kraftübertragung ist in der Herstellung und Montage einfach und kostengünstig.

In einer weiteren Ausgestaltung weist jedes Gestänge eine Stange und zwei Exzenter auf, wobei die Exzenter je eine Bohrung zur festen Aufnahme der Abtriebswelle oder der Klappenwelle und je eine Lagerstelle zur drehbaren Lagerung eines ersten oder zweiten Endes der Stange aufweisen. Hierdurch können vorhandene Toleranzen sicher ausgeglichen werden und das Drehmoment sicher von der Abtriebswelle auf die Klappenwelle übertragen werden.

Durch die beschriebenen Ausführungsformen wird es möglich, zwei Klappenwellen in entgegengesetzter Richtung mit nur einer Stellantriebsvorrichtung anzutreiben ohne zusätzliche Lagerstellen benutzen zu müssen. Des weiteren ist ein solcher Aufbau kostengünstig herzustellen, in seiner Montage und seinem Aufbau einfach, der Bauteilraum und die Bauteilanzahl sind gering und dennoch die Funktionsweise sicher und elektronisch überwachbar. Ein Ausführungsbeispiel ist in den Figuren dargestellt und wird nachfolgend beschrieben.

Figur 1 zeigt eine erfindungsgemäße Stellantriebsvorrichtung für zwei Schaltklappenwellen eines Luftansaugkanalsystems eines Verbrennungsmotors in V-Bauform in Draufsicht.

Figur 2 zeigt eine Getriebeeinheit einer solchen erfindungsgemäßen Stellantriebsvorrichtung bei geöffnetem Deckel in Draufsicht.

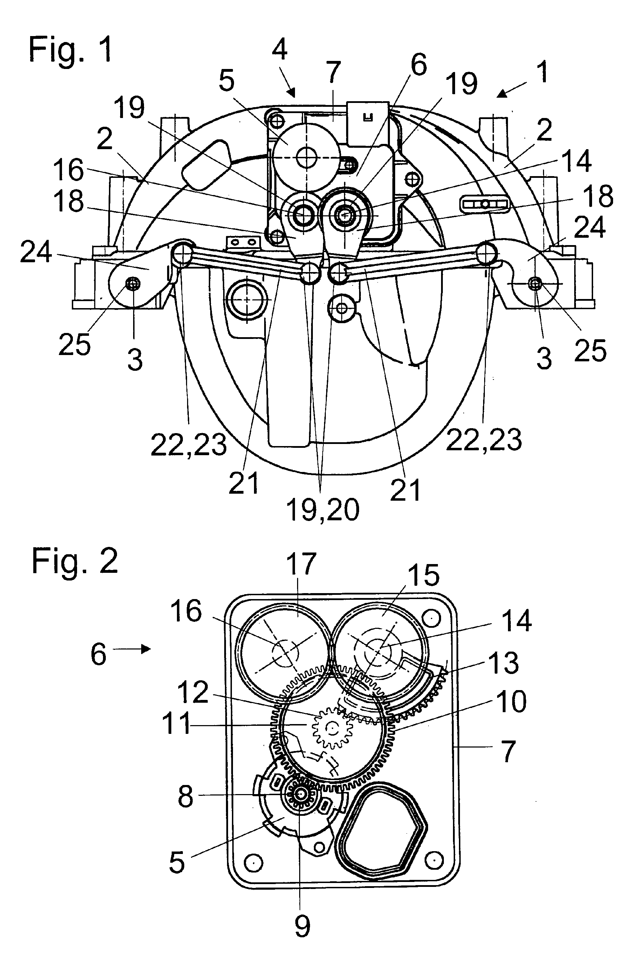

An einem in Figur 1 dargestellten Luftansaugkanalsystem 1 ist zur Verstellung zweier am Ende von zwei gegenüberliegenden Luftansaugkanälen 2 angebrachten Schaltklappenwellen 3 eine Stellantriebsvorrichtung 4 fest angeordnet. Ein Elektromotor 5 ist gemeinsam mit einer Getriebeeinheit 6 in einem Gehäuse 7 angeordnet. Der Elektromotor 5 treibt eine Antriebswelle 8 an, auf welcher, wie in Figur 2 zu erkennen ist, ein Antriebsritzel 9 drehbar angeordnet ist. Dieses Antriebsritzel 9 kämmt mit dem größeren Zahnrad 10 eines Doppelzahnrades 11 dessen kleineres Zahnrad 12 wiederum mit einem Zahnrad 13 kämmt, welches lediglich als Teilkreiszahnrad ausgeführt und auf einer ersten Abtriebswelle 14 angeordnet ist. Auf dieser ersten Abtriebswelle 14 ist ein weiteres Zahnrad 15 drehfest angeordnet, welches mit einem auf einer zweiten Abtriebswelle 16 drehfest angeordneten Zahnrad 17 kämmt, welches den gleichen Durchmesser und die gleiche Zähneanzahl aufweist, so daß der Drehwinkel der beiden Abtriebswellen 14, 16, entgegengesetzt und gleich groß ist. Die beiden Abtriebszahnräder 15 und 17 können dabei sowohl innerhalb als auch außerhalb des Gehäuses 7 angeordnet sein.

In Figur 1 ist zu erkennen, daß auf den Abtriebswellen 14,16, je ein Exzenter 18 drehfest angeordnet ist. Diese beiden Exzenter 18 haben je eine Bohrung 19, durch die die Antriebswellen 14, 16 greifen und worüber die Verbindung zwischen Abtriebswellen 14, 16 und Exzenter 19 hergestellt wird. Am jeweils entgegengesetzten Ende der Exzenter 18 ist je eine Lagerstelle 19 in Form eines Kugelkopfes angeordnet. Dieser Kugelkopf 19 steht in formschlüssiger Verbindung zu einer Pfanne 20, welche an einem ersten Ende einer Stange 21 angeordnet ist. Die beiden Stangen 21 weisen auch an ihrem entgegengesetzten Ende wiederum eine Pfanne 22 auf, die in formschlüssiger Verbindung zu je einer Lagerstelle 23 in Form eines Kugelkopfes eines weiteren Exzenters 24 stehen. Auch diese beiden Exzenter 24 weisen an dem der Lagerstelle 23 gegenüberliegenden Ende je eine Bohrung 25 auf, die durch je eine der Schaltklappenwellen 3 geführt ist. Auch hier besteht zwischen den Exzentern 24 und den zugehörigen einander gegenüberliegenden Schaltklappenwellen 3 eine drehfeste Verbindung.

Wird nun also von einer Motorsteuerung der Befehl zu einer Klappenverstellung gegeben, so treibt der Elektromotor 5 die Antriebswelle 8 an, wodurch die Zahnräder der Getriebeeinheit entsprechend der obigen Beschreibung in Drehung versetzt werden. Durch die Drehung der beiden Abtriebswellen 14, 16, die wie oben beschrieben über den auf ihnen angebrachten Abtriebszahnrädern 15, 17 miteinander gekoppelt sind, werden somit auch die beiden Exzenter 18 um den gleichen Drehwinkel, allerdings in entgegengesetzter Richtung, gedreht. Hierdurch findet eine im wesentlichen lineare Verschiebung der beiden Stangen 21 statt, die durch die beiden Exzenter 24 wiederum in eine entgegengesetzte Drehbewegung der beiden Schaltklappenwellen 3 umgewandelt wird, wodurch die entsprechenden Schaltklappen in den Luftansaugkanälen 2 in gleichem Maße gedreht werden und somit ein gleicher freier Durchströmungskanalquerschnitt zum Zylinder freigegeben wird.

Mit der beschriebenen Ausführungsform der Erfindung liegt eine Konstruktion vor, die die Vorteile der einfachen platzsparenden Bauweise und eine Kostenreduzierung gegenüber bekannten Systemen bei gleichzeitiger funktioneller Sicherheit miteinander verbindet. Veränderungen beispielsweise bezüglich der Anordnung oder Lagerung der Getrieberäder oder auch der Ausführung der verwendeten Zahnräder oder aber eine andere Art der Kopplung von den Abtriebswellen zu den Schaltklappenwellen sind denkbar, ohne jedoch den Inhalt der Patentansprüche zu verlassen. Des weiteren ist auch eine eventuell notwendige Erweiterung beispielsweise auf 3 oder 4 Abtriebswellen vorstellbar. Voraussetzung hierfür ist jedoch, daß die anzutreibenden Wellen in der notwendigen Drehwinkelverstellung voneinander abhängig sind, wobei dieses Verhältnis nicht wie im vorliegenden Fall 1:1 sein muß.

## Patentansprüche

1. Stellantriebsvorrichtung zur Verstellung von Schalt-, Regel- oder Steuerklappen in Verbrennungskraftmaschinen der V-Bauart mit zwei Klappenwellen, die über ein Antriebselement mit einer Antriebswelle und eine Getriebeeinheit antreibbar sind, wobei die Drehung der Antriebswelle mit einem vorgegebenen Übersetzungsverhältnis über die Getriebeeinheit auf eine Abtriebswelle übertragbar ist, **dadurch gekennzeichnet, daß** die Getriebeeinheit (6) zwei Abtriebswellen (16) aufweist, die jeweils mechanisch in Wirkverbindung mit der zugehörigen Klappenwelle (3) stehen.

2. Stellantriebsvorrichtung nach Anspruch 1, **dadurch gekennzeichnet, daß** das Antriebselement (5) ein Elektromotor ist.

3. Stellantriebsvorrichtung nach Anspruch 1 oder 2, **dadurch gekennzeichnet, daß** die Getriebeeinheit (6) zwei Abtriebszahnräder (15, 17) aufweist, die drehfest mit je einer Abtriebswelle (14, 16) verbunden sind.

4. Stellantriebsvorrichtung nach Anspruch 3, **dadurch gekennzeichnet, daß** das erste Abtriebszahnrad (15) mit dem zweiten Abtriebszahnrad (17) kämmt, so daß die beiden Abtriebswellen (14, 16) in entgegengesetzte Richtung drehend antreibbar sind.

5. Stellantriebsvorrichtung nach einem der vorhergehenden Ansprüche, **dadurch gekennzeichnet, daß** die mechanische Wirkverbindung zwischen jeweils einer der Abtriebswellen (14, 16) und jeweils einer der Klappenwellen (3) direkt über je ein Gestänge erfolgt.

6. Stellantriebsvorrichtung nach Anspruch 5, **dadurch gekennzeichnet, daß** jedes Gestänge eine Stange (21) und zwei Exzenter (18, 24) aufweist, wobei die Exzenter (18, 24) je eine Bohrung (19, 25) zur festen Aufnahme der Abtriebswelle (14, 16) oder der Klappenwelle (3) und je eine Lagerstelle (19, 23) zur drehbaren Lagerung eines ersten oder zweiten Endes der Stange (21) aufweisen.
